# EUROPEAN PATENT APPLICATION

(11) **EP 2 357 454 A1**
(43) Date of publication of application: **17.08.2011**
(21) Application number: 11154736.0
(22) Date of filing: 16.02.2011
(51) Int. Cl.: G01F 11/02, G01F 11/18, A21C 9/04

(54) **Volumetric doser of food products and method for dosing a food product**

(30) Priority: 17.02.2010 IT PD20100043
(71) Applicant: COMAS S.p.A., 36030 Pievebelvicino (IT)
(72) Inventor: Visonà, Stefano, I-36015, Schio (VI) (IT)
(74) Representative: Gallo, Luca

(57) **Abstract**

Volumetric doser of food products, in particular in shredded form, such as diced fruit and in particular diced apple, which comprises a hopper (2) for containing the food product (P), a mould (5) defining with opposite concavities (8) a dosing volume (20) of the food product (P) to be dispensed, divided into at least two half-moulds (6, 7) able to be slidingly actuated by movement means (10) so as to move in a guided fashion along an advancing direction (X), between two different operating positions. In greater detail, the said positions comprise a filling position (11), in which the two half-moulds (6, 7) are spaced apart so as to allow the food product (P) to flow out into a filling chamber (15) defined between the two half-moulds (6, 7) and located on the bottom (4) of the hopper (2); a closed position (13), in which the two half-moulds (6, 7) are closed against each other below the hopper (2), collecting inside the dosing volume (20) at least part of the food product (P) that has fallen from the hopper into the filling chamber (15); and an external position, in which the mould (5) is moved out from the bottom of the hopper (2). Expulsion means (18) are provided for extracting the food product (P) from the dosing volume (20) of the mould (5) when the two-half-moulds (6, 7) are in the aforementioned external position (14).

## Description

### Field of application

The present invention relates to a volumetric doser of food products and a method for dosing a food product according to the preamble of the respective independent claims.

The doser and the method in question are intended to be advantageously used in the sector of food industry in order to dispense in an automatic manner predefined quantities of a product, in particular in the form of small pieces, such as diced apple, inside dishes and bowls or onto pastry or dough bases.

### Background art

Volumetric dosers are widely used in the food industry in order to dispense in an automatic and repetitive manner predetermined quantities of food products, such as portions of mixes, fillings or the like, inside dishes and bowls, onto pastry or dough bases, onto conveyor belts or onto other supporting surfaces generally advancing underneath the doser.

The volumetric dosers of the known type exploit the physical characteristics of the products to be dosed, which are capable of occupying substantially the entire volume into which they are forced, in order to form the portions to be dispensed.

Flow-control volumetric dosers are known for example, said dosers defining the correct volume of product to be dispensed, measuring the time it takes for a given amount of product to pass through an outlet section of the doser.

Flow-control volumetric dosers are used only with products which are sufficiently fluid, i.e. able to ensure a constant flowrate of the product to be divided up periodically by means of a shutter element, while they are not suitable for use with products such as diced apple which, owing to its physical properties, is unable to flow in a constant manner.

Volumetric dosers are also known where the quantity of product to be dispensed is dosed by causing it to flow, in particular using vacuum suction means, inside a filling chamber of the desired volume, from where the quantity of product is then expelled externally onto a belt or into a dish depending on the specific application.

In greater detail, the volumetric dosers of this latter type usually comprise a containing hopper inside which the product to be dispensed is loaded, a dosing piston which initially, during its filling stroke, sucks the product from the hopper through a three-way valve until its chamber is completely filled and then, during its emptying stroke, expels it from the chamber through an outlet mouth with the three-way valve which in the meantime has connected the chamber to an outlet opening for the quantity of product.

In practice the volumetric dosers of this last known type described above have also proved to be unsuitable for processing products in shredded form or with a large granule size, or in form of small pieces, such as diced apple, or also minced products or the like, or in any case in a form such as to allow the passage of air through the product.

With these products, in fact, the piston is unable, by means of its filling stroke, to create a vacuum sufficient for sucking the product from the hopper into the filling chamber.

Moreover, the product of the type described above is often compacted inside the hopper, not managing to moved down towards the piston or being discharged in an excessively variable manner unsuitable for defining measured amounts of product which are sufficiently constant.

The patent FR 2,564,525 discloses a volumetric doser of food products in liquid or paste form and containing for example pieces of fruit or vegetable. The volumetric doser described therein comprises a hopper for containing the food product to be dosed and a cylindrical chamber which is arranged below the hopper and inside which two pistons are slidably mounted. The pistons are able to define between them, inside the cylindrical chamber, a filling chamber and can be actuated so as to move between a filling position, in which they are spaced apart with the filling station in communication with the hopper so as to allow the food product to flow out into it, and an emptying position, in which the two pistons spaced part as in the filling position are positioned with the filling chamber above a mouth for expelling the food product. The food product is intended to be drawn inside the filling chamber by the vacuum created by one of the pistons which slides away from the other piston, and is pushed out of the filling chamber through the expulsion mouth by one of the two pistons which, sliding towards the other piston until it makes contact with it, forces the food product out of the expulsion mouth of the cylindrical chamber.

The volumetric doser briefly described above is unable to dose in a precise and repetitive manner quantities of food product in shredded form since the system for filling the filling chamber does not ensure filling of the chamber always with the same amount of product, i.e. does not guarantee the definition of constant dosing volumes. In fact, in accordance with the doser described in the patent FR 2,564,525, the food products are drawn inside the filling chamber by the vacuum caused by the piston moving inside the cylindrical chamber in an approximate manner on account of the varying intensity with which the product is sucked from the hopper by the piston.

### Disclosure of the Invention

The underlying problem of the present invention is therefore to eliminate the drawbacks of the prior art mentioned above, by providing a volumetric doser of food products which is able to provide in a repetitive manner dosed amounts of food products, with varying physical characteristics, in particular in shredded form or in the form of small pieces, such as small pieces of fruit, in particular diced apple.

A further object of the present invention is to provide a volumetric doser which allows precise dosing of a food product, without causing squashing of or damage to said food product.

Another object of the present invention is to provide a volumetric doser which can be produced at a low cost.

A further object of the present invention is to provide a volumetric doser which is simple and operationally entirely reliable.

Finally, an object of the present invention is also to provide a method for dosing a food product, which is fast and which allow portions of products to be dispensed in shredded form.

These objects, together with other objects, are achieved by the volumetric doser of food products according to the present invention which comprises: a hopper for containing a food product, in particular of the shredded type, provided with at least one filling opening and with a bottom; a mould defining a dosing volume of a food product to be dispensed, arranged at the bottom of the hopper, divided into at least two half-moulds slidingly actuated by movement means so as to move in a guided fashion along an advancing direction X, between: - a filling position, in which the two half-moulds are spaced apart at least partially freeing the bottom of the hopper so as to allow the food product to flow out into a filling chamber defined between the two half-moulds; - a closed position, in which the two half-moulds are closed against each other below the hopper, collecting inside the dosing volume at least part of the food product that has fallen from the hopper into the filling chamber; - an external position, in which the mould with the two half-moulds closed is moved with the dosing volume out from the bottom of the hopper; expulsion means being envisaged for extracting the food product from the dosing volume of the mould with said half-moulds in said external position.

Owing to the volumetric doser according to the invention it is possible to dispense dosed amounts of food products also in shredded form, onto pastry or dough bases, inside dishes or bowls, in a low-cost and sufficiently precise manner.

### Brief description of the drawings

The technical features of the invention, in accordance with the abovementioned objects, may be clearly determined from the contents of the accompanying claims and the advantages thereof will emerge more clearly from the detailed description which follows, with reference to the accompanying drawings which illustrate a purely exemplary and non-limiting embodiment thereof, where:

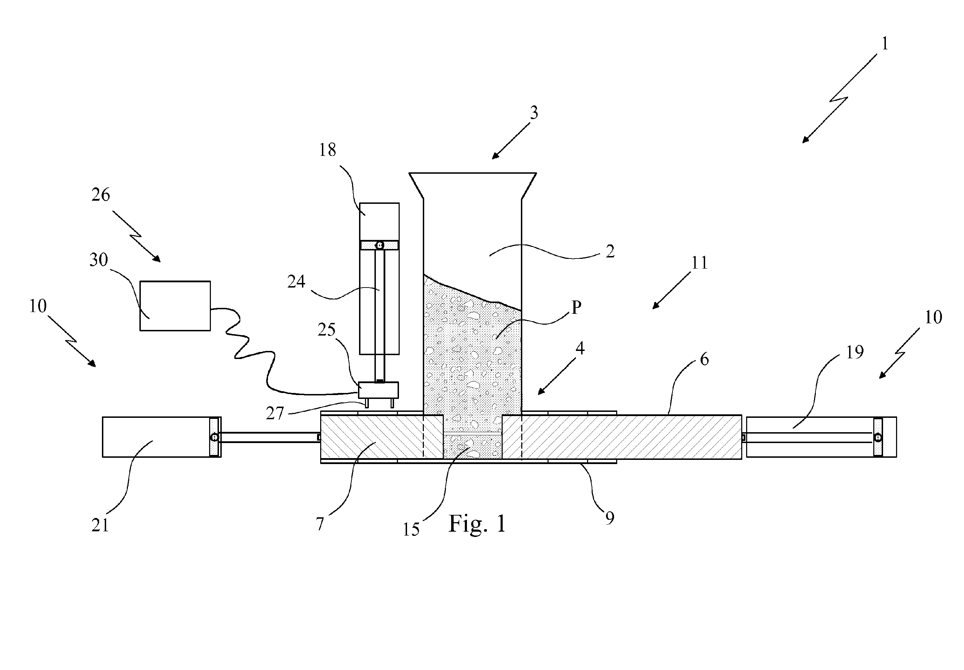

**FIG. 1** shows schematically a side view of the volumetric doser according to the present invention, with two envisaged half-moulds in a filling position;

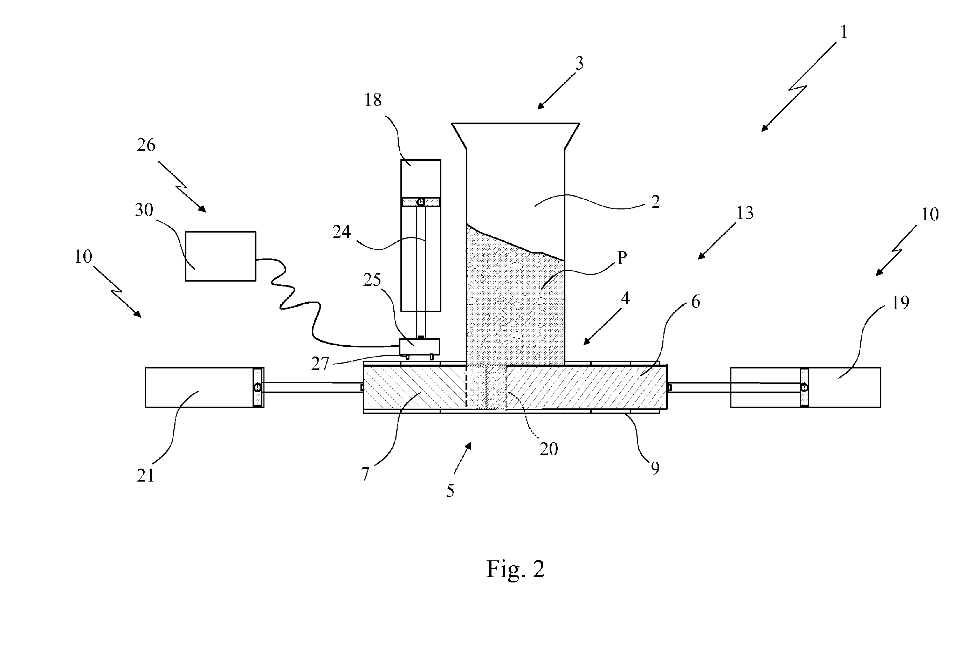

**FIG. 2** shows schematically a side view of the volumetric doser according to the present invention, with the two half-moulds in a closed position;

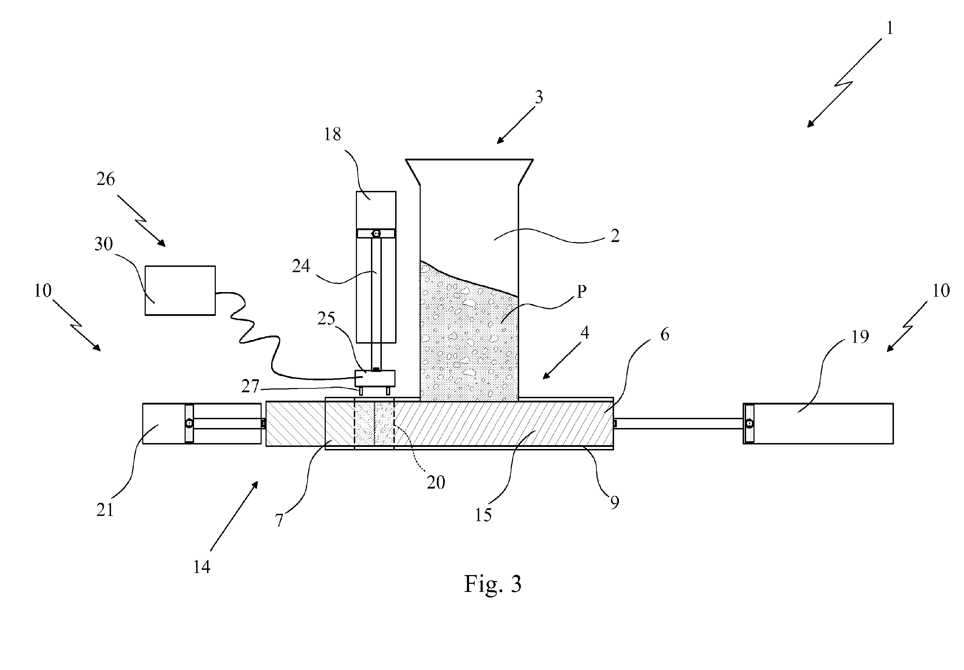

**FIG. 3** shows schematically a side view of the volumetric doser according to the present invention, with the two half-moulds in an external position;

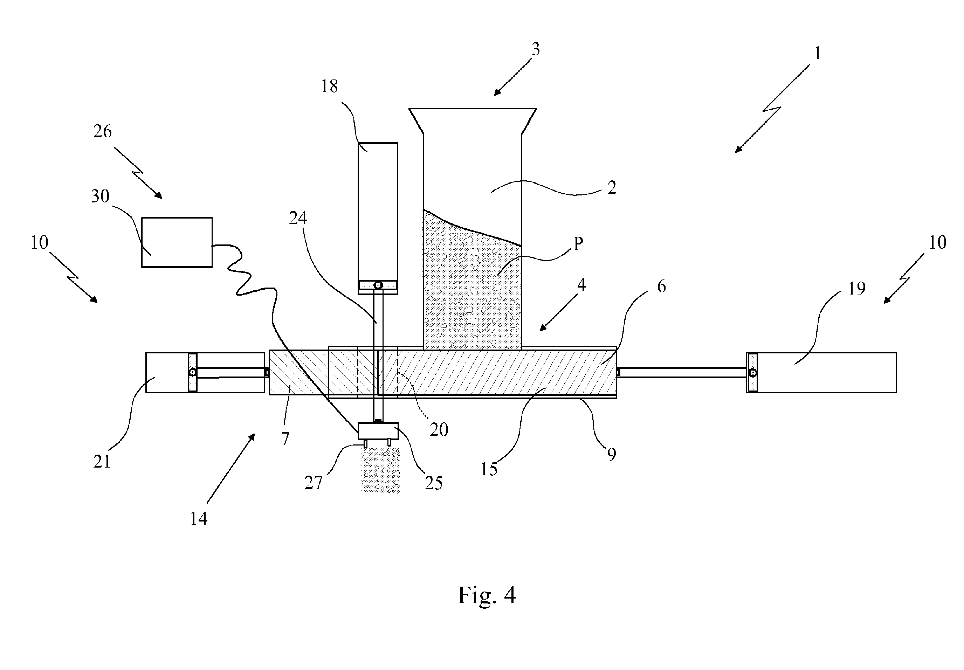

**FIG. 4** shows schematically a side view of the volumetric doser according to the present invention, with the two half-moulds in the external position and with the envisaged expulsion means operative;
**FIG. 5** shows schematically a plan view of an enlarged detail of the volumetric doser according to the present invention, relating to a mould in a closed position;
**FIG. 6** shows the mould according to Figure 5 in an open position;
**FIG. 7** shows a cross-sectional view of the mould according to Figure 5 cross-sectioned along the line VII-VII of the same Figure 5;
**FIG. 8** shows a cross-sectional view of the mould according to Figure 5 cross-sectioned along the line VIII-VIII of the same Figure 5;
**FIGS. 9 and 10** show two different perspective views of the mould according to Figure 6.

### Detailed description of a preferred example of embodiment

With reference to the accompanying drawings, 1 denotes in its entirety the volumetric doser of food products according to the present invention.

The volumetric doser according to the present invention is intended to process food products of varying density and composition and in particular advantageously shredded food products, or products in the form of small pieces or granules, or processed products, or coarse mixes, and in particular diced fruit such as diced apple.

In greater detail, the doser according to the present invention is suitable for dispensing measured portions of shredded products which have internally, between the pieces or the various parts forming it, channels through which air is able to pass.

Advantageously, the doser 1 is suitable in particular for dosing portions of diced apple inside basins containing a layer of pastry, for example shortcrust pastry, for making apple pies.

The doser according to the present invention is preferably intended to be installed in industrial plants for the production of finished food products, such as cakes, snacks, pizzas, in particular for dispensing precise amounts of a filling product or more generally of a component of the finished product, in a shredded form on top of dough or pastry bases, or inside dishes, ovenware, baking trays or onto conveyor belts, for transferring the semifinished product thus obtained towards stations for the following processing steps, such as a baking step and a packaging step

Below reference will be made in particular to the case where the food product P consists of diced apple for forming apple pies, it being understood, however, that the volumetric doser 1 may also be used for dosing, in other applications, any other type of food product P.

In accordance with the figures of the accompanying drawings the volumetric doser 1 comprises a hopper 2 for containing the food product P, provided with a filling opening 3 and a bottom 4 which is at least partially open. The hopper 2 may have a conventional conical form directed upwards or, preferably, a slight conicity directed downwards so as to favour falling of the food products P in shredded form.

A mould 5 is also envisaged, said mould being formed by two half-moulds 6, 7 which can be opened - preferably made of plastic which is suitable for the conveying of food products - and which define with two opposite concavities 8 a dosing volume 20 of a food product for defining the portions.

The two half-moulds 6, 7 are arranged inside a guide 9, in particular of the tubular type, at the bottom 4 of the hopper 2 and are actuated so as to slide inside the guide 9 by movement means 10 along the feeding direction X parallel to the guide.

In operational terms, the abovementioned movement means 10 displace the two half-moulds 6, 7 between: - a filling position 11, in which the two half-moulds 6, 7 are spaced apart; - a closed position 13, in which the two half-moulds 6, 7 are closed against each other below the hopper 2; - an external position 14, in which the two closed half-moulds are positioned with the dosing volume 20 outside of the space occupied by the hopper 2 and outside of the bottom 4.

In greater detail, in the filling position 11 the two half-moulds 6, 7 are positioned at opposite openings of the guide 9 for access to the bottom 4 of the hopper 2 and free at least partially (and mainly in accordance with the example shown in the accompanying figures) the bottom 4 of the hopper 2 so as to allow the food product to flow into a filling chamber 15.

The two half-moulds 6, 7 define laterally, in the axial direction of the guide 9, the filling chamber 15 which is able to receive from above the food product P.

The filling chamber 15 is further defined at the bottom by the guide 9 and at the front and rear, by the walls of the hopper 2.

The plan dimension of the filling chamber 15 is substantially equal to the breadth of the bottom 4 of the hopper 2.

The dosing volume 30 is defined with the half-moulds 6, 7 closed against each other, while the filling chamber 15 is defined with the half-moulds 6, 7 spaced apart and comprises the dosing volume 20 and the remaining volume which separates the front faces of the two half-moulds 6, 7.

In greater detail, the filling chamber 15 is defined laterally, in the axial direction of the guide 9, by the two half-moulds 6, 7 in the spaced apart position, below the guide 9 and, at the front and the rear, by the walls of the hopper 2.

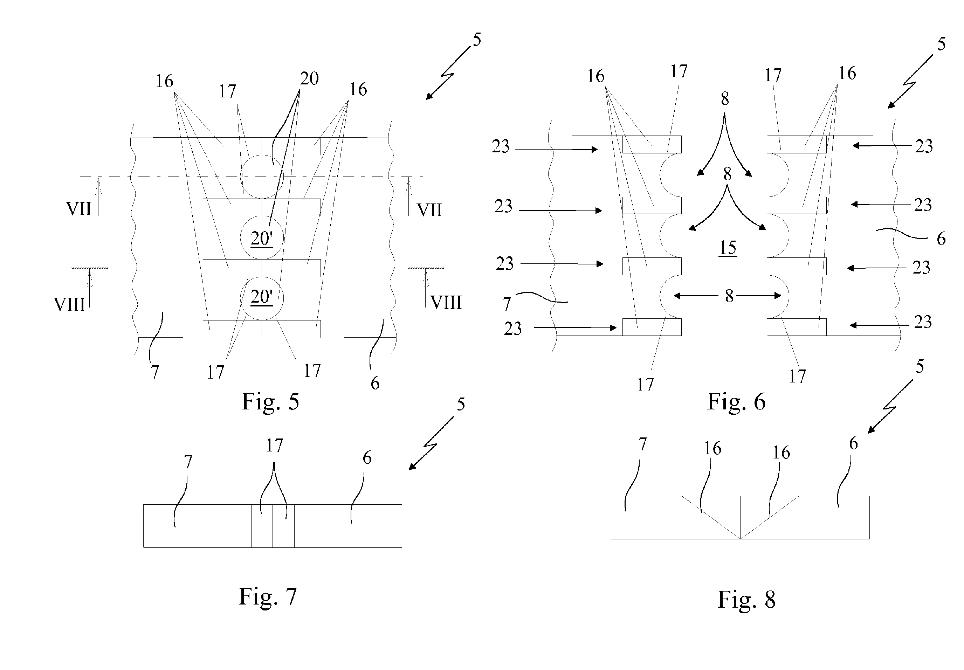

The filling chamber 15 therefore has a width (calculated along the axis of the guide 9) which is wider than the width of the dosing volume 20 defined by the concavities 8, as can be seen from Figure 5 and 6.

In this way, the filling chamber 15 is able to receive inside it, with the half-moulds 6, 7 in a filling position 11, a quantity of food product P which is much greater than the portion required to fill the actual dosing chamber 20. The quantity of product contained inside the filling chamber 15 is deliberately greater than the quantity of product able to be contained inside the dosing volume 20, in order to ensure complete filling of the dosing volume 20 and allow the repetitive definition of substantially constant amounts of food product.

The two half-moulds 6, 7, closed against each other in the closed position 13, collect inside the dosing volume 20 at least part of the food product P which is contained in the filling chamber 15 and has fallen down from the hopper 2.

In greater detail, as will be explained more fully below, the closed position 13 is reached from the filling position 11 by moving inside the guide 9, by means of the movement means 10, the first half-mould 6 along the advancing direction X so as to bring it up against the second half-mould 7 located so as to close the guide 9 in the position opposite that from where the first half-mould 6 comes. In this way, the first half-mould 6, during its movement towards the second half-mould 7, collects inside the dosing volume 20, all the product which is situated along its path and the advancing direction X.

As will be explained below, the food product P located outside of the aforementioned path is not squashed between the two half-moulds 6, 7 but, in order to prevent damage thereto, is preferably raised by envisaged inclined bases 16 located along the sides of the two concavities 8 and separated from the latter by means of the thin dividing walls 17.

The latter taper away from the front faces of the two half-moulds 6, 7 so as to define the concavities 8, in particular with a semi-cylindrical shape.

Once the first half-mould 6 has come into contact against the second half-mould 7, it conveys it towards the outside of the hopper 2, keeping the concavities 8 closed against each other, until it reaches the aforementioned external position 14 where the expulsion means 18 extract the food product P from the dosing volume 20 so as to direct it for example into a bowl lined with sheet of pastry which advances on a conveyor belt situated underneath, towards a baking oven.

The movement means 10, mentioned above, comprise a first actuator 19 connected to the first half-mould 6 so as to move it between the aforementioned positions 11, 13 and 14 and elastically yielding means 21, acting on the second half-mould 7 so as to keep it pressed against the first half-mould 6, when the first actuator 19 moves this latter half-mould from the closed position 13 into the external position 14.

An end-of-travel stop (not shown) is present for stopping the second half-mould 7 when it is released by the first half-mould 6 which, once the closed position 13 has been reached, continues in fact towards the filling position 11 for repetition of the dosing cycle.

The first actuator 19 may consist of any movement device known to the person skilled in the art, such as a pneumatic piston, a hydraulic piston, a motor with speed reducer, or worm screw with crank/connecting rod mechanism.

The elastically yielding means 21 may consist of a simple spring or a pneumatic piston.

The expulsion means 18 are in turn formed by a second actuator provided with a punch 24 which terminates in a shaped head 25 able be inserted with a close fit inside the cross-section of the dosing volume 20 in order to extract the food product P from inside it.

Preferably, the aforementioned shaped head 25 has associated air blowing means 26 suitable for favouring expulsion of the food product P from the dosing volume 20.

These air blowing means 26 will comprise an air source 30 connected by means of conveying pipes to one or more nozzles 27 arranged on the shaped head 25 of the punch 24.

In a preferred embodiment of the present invention, the dosing volume 20 is formed by a plurality of cells 20' composed of opposite concavities 8 formed on the front faces of the two half-moulds 6, 7.

Each cell 20' is separated from the adjacent one by means of a thin dividing wall 17, mentioned above, intended to meet, in the closed position 13 of the two half-moulds 6, 7, with the corresponding dividing wall 17 provided on the opposite half-mould.

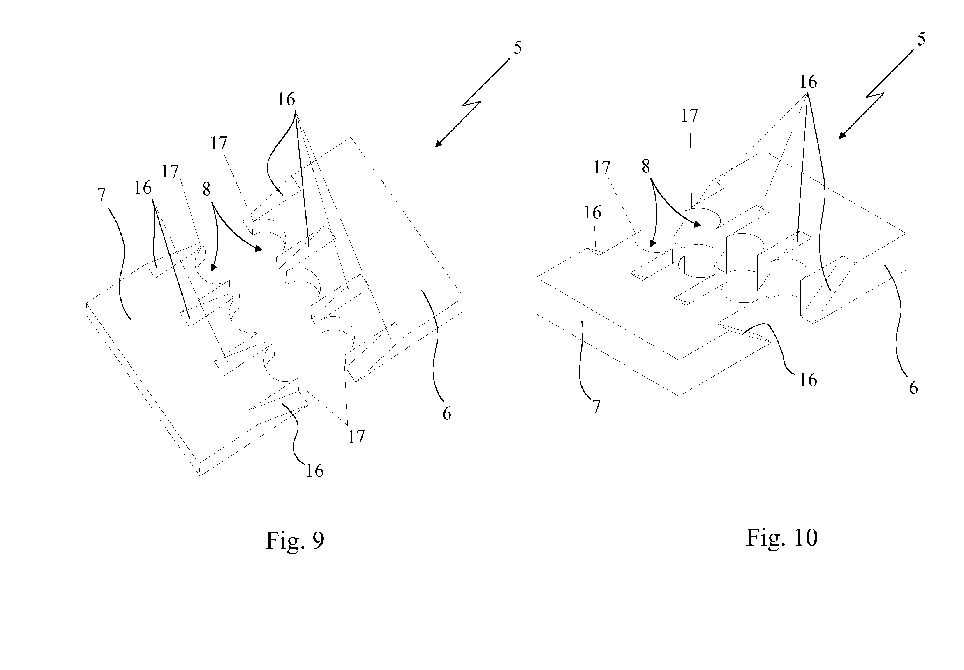

With reference to the embodiment shown in particular in Figures 9 and 10, each of the two half-moulds 6 and 7 is provided with a side portion 23, opposite to that of the other half-mould 7, 6, arranged adjacent to the concavity 8 and separated from it by means of the dividing wall 17.

The abovementioned side portions 23 are defined between the aforementioned dividing walls 17 (the end ones by a single wall) and by the inclined base 16. The said inclined base is designed to raise the food product P, with a cutting action, during the movement of the half-moulds from the filling position 11 into the closed position 13.

The aforementioned inclined bases 16 define a "reservoir" inside which part of the food product P collected during the movement of the first half-mould 6 from the filling position 11 into the closed position 13 is introduced.

Preferably, in accordance with an embodiment not shown in detail in the accompanying figures, these inclined bases 16 are provided only on the first half-mould 6 such that the food product P, which has accumulated inside this reservoir, may be mixed with the food product P contained inside the hopper 2 while the first half-mould 6 advances in the direction of the second half-mould 7 or from the filling position 11 into the closed position 13.

The second half-mould 7, in fact reaching preferably only the edge of the filling chamber 15, could not mix again the food product P which has accumulated on top of its inclined base 16.

Advantageously, the first actuator 19 moves the first half-mould 6 from the closed position 13 into the filling position 11 at a speed able to create a vacuum inside the filling chamber which draws inside it the food product P in shredded form. More clearly, the speed of separation of the first half-mould 6 from the second half-mould 7 results in an increase in volume below the hopper 2, with the formation of the filling chamber 15, which is not compensated for by the air which filters between the air passage channels present between the pieces of food product P contained inside the hopper 2. Consequently, the food product P is forced by the vacuum which has formed following separation of the two half-moulds 6, 7 to move inside the filling chamber 15.

The present invention also relates to a method for dosing a food product P, which method, in particular makes use of the apparatus 1 described above, for which the same reference numbers will be retained below for the sake of simplicity of the description.

The method may be repeated cyclically so as to dose a succession of portions of food product P contained inside the hopper 2 for example inside a plurality of bowls or dishes advancing on a conveyor belt towards a following processing station such as an oven.

The method comprises a step for opening the mould 5, in which the first half-mould 6 is moved by the first actuator 19 from the closed position 13 into the filling position 11, causing the mould 5 to open and the food product P to fall into the filling chamber 15.

This is then followed by a step for closing the mould 5, where the first half-mould 6 is moved by the first actuator 19 from the filling position 11 into the closed position 13, where the two half-moulds 6, 7 are arranged against each other and define the dosing volume with their concavities 8. During this step the food product P which has fallen from the hopper 2 into the filling chamber 15 and which is intercepted by the concavity 8 (or by the concavities 8 in the case of several cells 20') of the first half-mould 6 which advances towards the second half-mould 7 is collected between the concavities 8.

During the abovementioned closing step part of the food product P is advantageously raised by the inclined bases 16 towards the top of the hopper 2.

Upon reaching the second half-mould 7, the first half-mould 6 produces with its further advancing movement a transportation step where the mould 5 with its half-moulds 6, 7 closed is moved by the first actuator 19 from below the hopper 2 into the external position 14 outside of the space occupied by the said hopper 2.

In this position, an expulsion step occurs where the expulsion means 18 extract the food product P from the dosing volume 20 of the mould 5.

The invention thus conceived therefore achieves the predefined objects.

Obviously, it may assume, during its practical realization, also forms and configurations different from that illustrated above, without thereby departing from the present scope of protection.

Moreover, all the details may be replaced by technically equivalent elements and the dimensions, the forms and the materials used may be of any nature according to requirements.

## Claims

1. Volumetric doser of food products, **characterised in that** it comprises:
- at least one hopper (2) for containing a food product (P), in particular of the shredded type, provided with at least one filling opening (3) and with a bottom (4);
- at least one mould (5) defining a dosing volume (20) of a food product to be dispensed, arranged at the bottom (4) of said hopper (2), divided into at least two half-moulds (6, 7) slidingly actuated by movement means (10) so as to move in a guided fashion along an advancing direction X, between:
- a filling position (11), in which said half-moulds (6, 7) are spaced apart at least partially freeing the bottom (4) of said hopper (2) so as to allow said food product (P) to flow out into a filling chamber (15) defined between said two half-moulds (6, 7);
- a closed position (13), in which said half-moulds (6, 7) are closed against each other below said hopper, collecting inside the dosing volume (20) at least part of said food product (P) that has fallen from said hopper (2) into said filling chamber (15);
- an external position (14) in which said mould having said half-moulds (6, 7) closed is moved with said dosing volume (20) out from the bottom (4) of said hopper (2);
- expulsion means (18) suitable for extracting the food product (P) from the dosing volume (20) of said mould (5) with said half-moulds (6, 7) in said external position (14).

2. Volumetric doser according to claim 1, **characterised in that** said movement means (10) comprise at least one first actuator (19) mechanically connected to a first half-mould (6) so as to move it between said filling position (11), in which it is separated from the second half-mould (7), said closed position (13) in which it makes contact against the second half-mould (7) collecting inside said dosing volume (20) the portion of product (P) to be dispensed, and said external position (14) in which said first half-mould (6) acts against said second half-mould (7) overcoming the resistance force of elastically yielding means (21) mechanically connected to said second half-mould (7).

3. Volumetric doser according to any one of the preceding claims, **characterised in that** said hopper (2) is provided at the bottom with a tubular guide (9) facing the bottom (4), and having said half-moulds (6, 7) slidingly inserted.

4. Volumetric doser according to any one of the preceding claims, **characterised in that** with said half-moulds (6, 7) in the filling position (11) said second half-mould (7) is arranged at one end of the filling chamber (15) at a wall of the hopper (2) opposite to the one closest to the first half-mould (16).

5. Volumetric doser according to any one of the preceding claims, **characterised in that** each of said half-moulds (6, 7) is provided with at least one side portion (23), opposite to that of the other half-mould (7, 6), arranged adjacent to said dosing volume (20) and separated from it by means of a dividing wall (17).

6. Volumetric doser according to any one of the preceding claims, **characterised in that** said dosing volume is formed by a plurality of cells (20') defined by said half-moulds (6, 7).

7. Volumetric doser according to claims 5 and 6, **characterised in that** each cell (20') is separated from the adjacent one by a dividing wall (17).

8. Volumetric doser according to claim 5, **characterised in that** at least one of the opposite side portions (23) of said half-moulds (6, 7) is provided with an inclined base (16) suitable for raising the food product (P) during the passage of said half-moulds (6, 7) from said filling position (11) to said closed position (13).

9. Volumetric doser according to claim 2, **characterised in that** said food product (P) is in shredded form consisting of pieces able to create air passage channels, and **characterised in that** said first actuator (19) moves said first half-mould (6) from said closed position (13) to said filling position (11) at a speed able to create a vacuum for suction of said food product (P) inside said filling chamber (15).

10. Method for dosing a food product by means of the apparatus according to any one of the preceding claims, **characterised in that** it comprises:
- at least one step for opening said mould (5), where said first half-mould (6) is moved by means of said movement means (10) from said closed position (13) into said filling position (11) causing the mould (5) to open and said food product (P) to fall into said filling chamber (15);
- at least one step for closing said mould (5), where said first half-mould (6) is moved by said movement means (10) from said filling position (11) into said closed position (13), causing the two half-moulds (6, 7) of said mould (5) to close against each other below said hopper (2) and consequently the collection, inside the dosing volume (20), of at least part of said food product (P) that has fallen from said hopper (2) into said filling chamber (15);
- at least one transportation step where said mould (5) with the half-moulds (6, 7) closed is moved by said movement means (10) from beneath said hopper (2) into said external position (4) outside of the space occupied by said hopper (2);
- at least one expulsion step where said expulsion means (18) extract the food product (P) from said dosing volume (20) of said mould (5) in said external position (14).

11. Dosing method according to claims 8 and 10, **characterised in that** during said closing step part of the food product (P) is raised by said inclined bases (16) inside said hopper (2).
